# EUROPÄISCHE PATENTSCHRIFT

(11) **EP 1 435 768 B1**
(45) Veröffentlichungstag und Bekanntmachung des Hinweises auf die Patenterteilung: **02.02.2005**
(21) Anmeldenummer: 01978421.4
(22) Anmeldetag: 16.10.2001
(51) Int. Cl.: A01D 57/02

(54) **ZINKEN ZUR BEFESTIGUNG AN EINEM ZYLINDRISCHEN TRÄGERROHR EINER HASPEL UND ZINKENANORDNUNG MIT EINEM TRÄGERROHR UND MINDESTENS EINEM ZINKEN**
TINE FOR FIXING TO A CYLINDRICAL CARRIER BAR OF A REEL AND A TINE ASSEMBLY COMPRISING A CARRIER BAR AND AT LEAST ONE TINE
DENT DESTNEE A ETRE FIXEE SUR UNE BARRE PORTEUSE CYLINDRIQUE D'UN RABATTEUR, ET SYSTEME DE DENT COMPRENANT UNE BARRE PORTEUSE ET AU MOINS UNE DENT

(43) Veröffentlichungstag der Anmeldung: 14.07.2004
(73) Patentinhaber: Schumacher, Gustav, 57612 Eichelhardt (DE)
(72) Erfinder: SCHUMACHER, Gustav, 57612 Eichelhardt (DE); SCHUMACHER, Friedrich-Wilhelm, 57612 Eichelhardt (DE)
(74) Vertreter: Harwardt, Günther, Dipl.-Ing.
(86) Internationale Anmeldenummer: PCT/EP2001/011937
(87) Internationale Veröffentlichungsnummer: WO 2003/032709

(56) Entgegenhaltungen:
- DE-A- 19 858 452
- FR-A- 1 306 167
- FR-A- 1 407 600
- SU-A- 733 549
- US-A- 1 978 717
- US-A- 3 148 494
- PATENT ABSTRACTS OF JAPAN vol. 013, no. 516 (C-656), 17. November 1989 (1989-11-17) & JP 01 211424 A (ISEKI & CO LTD), 24. August 1989 (1989-08-24)

## Beschreibung

Die Erfindung betrifft einen Zinken zur Befestigung an einem zylindrischen Trägerrohr einer Haspel für Schneidwerke an Erntemaschinen aus einem im Querschnitt runden, stabförmigen Ausgangsmaterial, sowie eine Zinkenanordnung umfassend ein zylindrisches Trägerrohr und mindestens einen derartigen Zinken.

Eine Haspel einer Erntemaschine umfasst in der Regel mehrere um ein Zentralrohr radial beabstandete und umfangsverteilte Trägerrohre, die von entsprechenden Lagerarmen, die mit dem Zentralrohr verbunden sind, getragen werden. Die Trägerrohre selbst sind an den Lagerarmen drehbar gelagert. Darüber hinaus ist die Haspel um die Achse des Zentralrohres drehbar gelagert. Je nach Breite eines Mähtisches einer Erntemaschine ist eine solche Haspel sehr lang und entsprechend lang sind auch die Trägerrohre. Die Trägerrohre tragen Zinken, die über die Länge verteilt angeordnet sind. Beispielsweise sind üblicherweise an einem sechs Meter langen Trägerrohr 40 und mehr Zinken befestigt. Bei einer Haspel mit sechs Trägerrohren ergeben sich somit 240 Zinken und mehr. Die Zinken selbst bestehen in der Regel aus einem Federstahldraht, d. h. einem stabförmigen Material. Die Federungseigenschaften der Zinken werden durch einen Schraubenfederabschnitt bestimmt, welche so ausgelegt sind, dass der Zinken ausweichen kann, wenn sich beispielsweise Hindernisse in Form von Erdwulsten oder größeren Steinen vor der Mäheinrichtung vorhanden sind. Zur Befestigung der Zinken am Trägerrohr sind verschiedene Ausführungsformen bekannt geworden.

Die DE 198 58 452 A1 beschreibt eine Anordnung, bei der das Trägerrohr eine oder mehrere Längsnuten aufweist, in welche die Zinken jeweils mit einem abgebogenen Windungsende eingreifen. Dabei ist ein Windungsende eines Schraubenfederabschnitts so gebogen, dass ein gabelförmiger das Trägerrohr übergreifender Abschnitt entsteht, dessen Gabelenden den Durchmesser des Trägerrohres überschreiten und Öffnungen bilden, durch die eine Schraube quer zur Längsachse des Trägerrohres zur Verspannung hindurch geführt ist. Von Nachteil ist, dass profilierte Rohre teuer sind. Die Ausbildung erfordert paarweise gefertigte Zinken, deren Verbindungsbereich in eine der Nuten eingreift.

Die US 5 007 235 beschreibt ebenfalls eine Zinkenanordnung mit einem Doppelzinken mit zwei Schraubenfederabschnitten, wobei eine gemeinsame Festlegung in Drehrichtung um die Längsachse des Trägerrohres durch eine Befestigungsschraube erfolgt, die quer zum Verlauf der Angriffsabschnitte der Zinken das Trägerrohr passiert. Der Nachteil dieser Befestigungsart ist, dass die Befestigungsöse zu den Angriffsabschnitten um die Länge des Schraubenfederabschnitts seitlich versetzt ist. Die Öse befindet sich nicht auf oder nahe der Belastungslinie des Angriffsabschnitts. Es entsteht dadurch eine Drehbelastung. Aus diesem Grunde ist auch bei der vorbeschriebenen Ausführungsform der Schraubenfederabschnitt um das Trägerrohr herum verlaufend ausgebildet.

Der Erfindung liegt die Aufgabe zugrunde, einen Zinken zur Befestigung an einem zylindrischen Trägerrohr einer Haspel sowie eine Zinkenanordnung mit einem Trägerrohr mit mindestens einem Zinken vorzuschlagen, wobei die Zinken als Einzelzinken für den Einsatz im Zusammenhang mit zylindrischen Trägerrohren geeignet sind, bei denen die Befestigung in Hinsicht auf das Einwirken der Last keine Verdrehung um eine zur Längsachse des Trägerrohrs senkrechte Achse erfährt und wobei der Zinken leicht montierbar ist.

Gelöst wird diese Aufgabe erfindungsgemäß durch einen Zinken zur Befestigung an einem zylindrischen Trägerrohr einer Haspel für Schneidwerke an Erntemaschinen aus einem im Querschnitt runden, stabförmigen Ausgangsmaterial, umfassend
- einen zu einer Schraubenlinie mit mindestens einer Windung um eine Schraubenfederachse gewundenen Schraubenfederabschnitt mit einem ersten Windungsende und einem zweiten Windungsende,
- einen geraden oder gebogen verlaufenden Angriffsabschnitt, der sich an das erste Windungsende des Schraubenfederabschnitts kontinuierlich anschließt und an einem freien Ende endet,
- einen Befestigungsabschnit, der sich an das zweite Windungsende kontinuierlich anschließt,
   der an seinem freien Ende zu einer Öse mit einer Durchtrittsöffnung gebogen ist, wobei die Öse in Richtung zum ersten Windungsende vorsteht, der einen der Öse vorgeschalteten und mit einem Kreisbogen, der auf einer zur Schraubenfederachse parallelen Biegeachse zentriert ist, verlaufenden Anlageabschnitt aufweist, und der ferner einen an den Anlageabschnitt anschließenden und im zweiten Windungsende endenden Übergangsabschnitt aufweist,
wobei die Schraubenfederachse und die Biegeachse gleichsinnig von dem Angriffsabschnitt versetzt sind.

Die Öse ist dabei mit dem zweiten Windungsende so verbunden, dass ein entsprechend dem Außenumfang des Trägerrohres gebogener Anlageabschnitt vorgeschaltet ist, der mit einem Übergangsabschnitt in dem zweiten Windungsende des Schraubenfederabschnitts endet. Der Anlageabschnitt legt sich eng an den Außenumfang des zylindrischen Trägerrohres an. Durch die Orientierung der Öse ergibt sich für die Schraube eine Anordnung, die im Ruhezustand des Zinkens etwa parallel zu dem Übergangsabschnitt bzw. Angriffsabschnitt verläuft, so dass bei Belastung des Zinkens am Angriffsabschnitt die Schraube nicht mehr im wesentlichen nur auf Zug, sondern im wesentlichen nur auf Scherung beansprucht wird. Dies hat den Vorteil, dass auch keine negativen Auswirkungen auf das Rohr gegeben sind, weil bei reiner Zugbelastung ein stärkeres Einspannen erfolgen müsste, das die Gefahr des Einschnürens des Rohres mit sich bringt.

Das Trägerrohr wird mithin durch die Belastung nicht mehr zusammengezogen und die zur Befestigung vorgesehene Schraube kann sich auch nicht mehr lockern. Das Anzugsdrehmoment für die Befestigungsschraube kann dabei auch kleiner gewählt werden. Ein weiterer Vorteil besteht darin, dass aufgrund dessen, dass die Öse mit dem Angriffsabschnitt annähernd in einer Ebene angeordnet ist, sich auch keine Hebelwirkung, die den Zinken verdrehen will, ergibt. Dadurch, dass die Öse in Richtung des ersten Windungsendes vorsteht, liegt sie im Längenbereich des Schraubenfederabschnitts, so dass die Gesamtbreite des Zinkens gering ist und die Teilung der Befestigungsbohrungen am Trägerrohr einfacher festzulegen ist.

Vorzugsweise weist der Eingriffsabschnitt ausgehend vom ersten Windungsende einen ersten Bereich auf, der mit dem Übergangsabschnitt des Befestigungsabschnitts in einer Ebene liegt. Der Übergangsabschnitt und der Angriffsabschnitt stehen in entgegengesetzten Richtungen vom Schraubenfederabschnitt vor. Vorzugsweise ist die Öse rechtwinklig zu einer durch den kreisbogenförmigen Anlageabschnitt aufgespannten Ebene angeordnet.

Gelöst wird die Aufgabe ferner durch eine erfindungsgemäße Zinkenanordnung für eine Haspel für Schneidwerke an Erntemaschinen, mit
- einem zylindrischen Trägerrohr,
   das eine Längsachse und quer dazu eine Durchgangsbohrung aufweist,
- einer Befestigungsschraube,
   die einen Kopf und eine Mutter aufweist, und
- mindestens einem Zinken, umfassend
- einen zu einer Schraubenlinie mit mindestens einer Windung um eine Schraubenfederachse gewundenen Schraubenfederabschnitt mit einem ersten Windungsende und einem zweiten Windungsende,
- einen geraden oder gebogen verlaufenden Angriffsabschnitt, der sich an das erste Windungsende des Schraubenfederabschnitts kontinuierlich anschließt und an einem freien Ende endet,
- einen Befestigungsabschnit,
   der sich an das zweite Windungsende kontinuierlich anschließt,
   der an seinem freien Ende zu einer Öse mit einer Durchtrittsöffnung gebogen ist, wobei die Öse in Richtung zum ersten Windungsende vorsteht,
   der einen der Öse vorgeschalteten und mit einem Kreisbogen, der auf einer zur Schraubenfederachse parallelen Biegeachse zentriert ist, verlaufenden Anlageabschnitt aufweist, und
   der ferner einen an den Anlageabschnitt anschließenden und im zweiten Windungsende endenden Übergangsabschnitt aufweist,
   wobei die Schraubenfederachse und die Biegeachse gleichsinnig von dem Angriffsabschnitt versetzt sind,
wobei die Längsachse die Biegeachse darstellt und parallel zur Schraubenfederachse verläuft und wobei das Trägerrohr zwischen einem Außenumfangsabschnitts des Schraubenfederabschnitts und dem Befestigungsabschnitt angeordnet ist, so dass es von diesen teilweise umschlossen ist.

Aus dieser Anordnung ergeben sich auch die Vorteile, die unmittelbar aus der Gestaltung des Zinkens resultieren. Insbesondere ergibt sich die Möglichkeit für eine günstige. Anordnung der Schrauben. Ferner ergibt die Anordnung, bei der das Trägerrohr zwischen dem Anlageabschnitt und dem Schraubenfederabschnitt eingeschlossen ist, eine günstige Montage. Von Vorteil ist ferner, dass sich der Schraubenfederabschnitt unmittelbar an dem Schraubenkopf oder der Mutter abstützen kann, so dass kein unmittelbarer Kontakt bei der Abstützung der den Angriffsabschnitt belastenden Kräfte an dem Trägerrohr gegeben ist, die zu einem Verschleiß führen würde. Die zur Befestigungsschraube gehörenden Teile, wie Schraubenkopf und Mutter, sind aus einem verschleißfesterem Material hergestellt als beispielsweise das Trägerrohr selbst.

In der Zeichnung ist eine Ausführungsform des erfindungsgemäßen Zinkens dargestellt. Ferner sind zwei unterschiedliche Gestaltungen für die Befestigung des Zinkens ersichtlich.

Es zeigt
- Figur 1: eine Seitenansicht des erfindungsgemäßen Zinkens in Zuordnung zu dem geschnitten dargestellten Trägerrohr und zu einem Mähfinger,
- Figur 2: eine Vorderansicht auf den Zinken, wobei jedoch der Mähfinger nicht dargestellt ist, mit einer ersten Ausführungsform einer Befestigungsschraube,
- Figur 3: eine der Figur 1 entsprechende Darstellung jedoch mit einer anderen Befestigungsschraube zur Festlegung des Zinkens am Trägerrohr,
- Figur 4: eine Vorderansicht auf die Zinkenanordnung gemäß Figur 3, und
- Figur 5: eine Darstellung hinsichtlich der Montage eines Zinkens im Zusammenhang mit einer Befestigungsschraube gemäß einer Ausführung der Figuren 3 und 4.

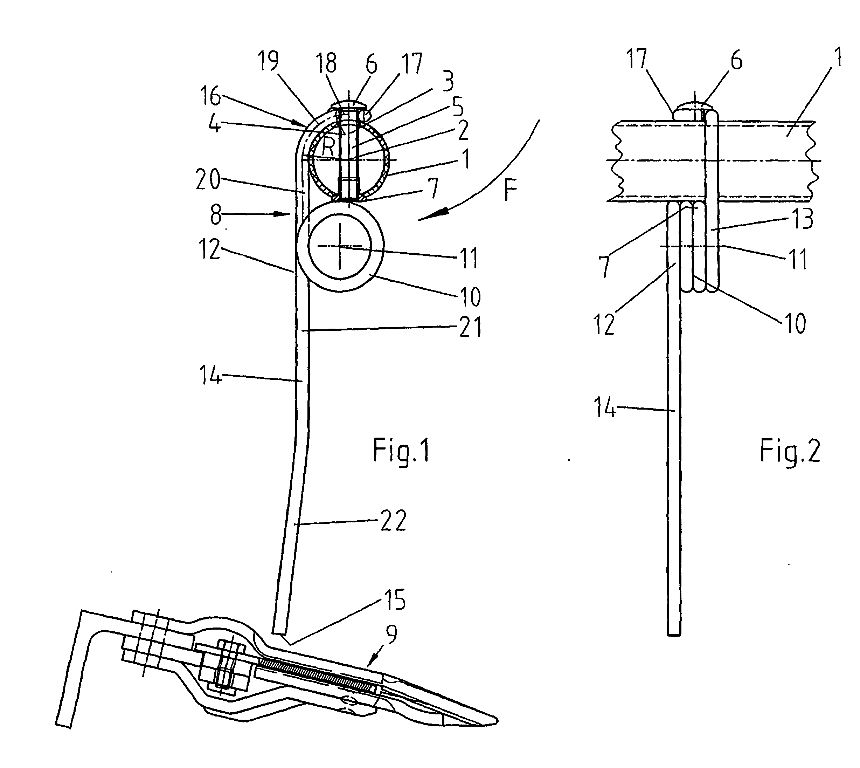

Zunächst wird die Ausführungsform des Zinkens gemäß Figuren 1 und 2 beschrieben.

Aus Figur 1 ist das Trägerrohr 1 erkennbar, das zylindrisch gestaltet ist und eine Längsachse 2 aufweist. Auf der Bohrungsachse 3 verläuft eine Durchgangsbohrung 4 quer zur Längsachse 2 durch das Trägerrohr 1 hindurch. Diese dient zum Durchtritt einer Befestigungsschraube 5, die einen Kopf 6 und eine Mutter 7 trägt. Die Befestigungsschraube 5 dient zur Befestigung des Zinkens 8, der das von dem im Bereich des Mähfingers 9 beweglichen Mähmessers abgetrennte Halmgut aus dem Bereich des Mähfingers 9 wegbefördert, wozu das an einem Haspelstern befestigte Trägerrohr 1 um eine zur Längsachse 2 versetzte Achse in Drehrichtung F rotierbar ist. Dabei kann zusätzlich noch das Trägerrohr 1 selbst um die Längsachse 2 drehbar sein. Der Zinken 8 umfasst einen Schraubenfederabschnitt 10, in welchem das stabförmige Material, aus dem der Zinken 8 hergestellt ist, schraubenfederartig um die Schraubenfederachse 11 in zumindest einer, vorzugsweise jedoch mehreren Windungen gewunden ist. Der Schraubenfederabschnitt 10 besitzt ein erstes Windungsende 12 und davon beabstandet ein zweites Windungsende 13. Diese stehen in entgegengesetzten Richtungen ab. An das erste Windungsende 12 schließt sich kontinuierlich ein Angriffsabschnitt 14 an, der bei dem dargestellten Ausführungsbeispiel zwei Bereiche aufweist, nämlich einen ersten annähernd tangential verlaufenden Bereich 21 und einen dazu abgewinkelten zweiten Bereich 22. Der Angriffsabschnitt 14 endet in dem freien Ende 15. An das zweite Windungsende 13 schließt sich der Befestigungsabschnitt 16 kontinuierlich an, welcher einen Übergangsabschnitt 20 umfasst, der annähernd in einer Ebene mit dem ersten Bereich 21 des Angriffsabschnittes 14 liegt. An diesen schließt sich ein Anlageabschnitt 19 an, der einen Kreisbogen von annähernd 90° einschließt und dessen Verlauf der Außenfläche des zylindrischen Trägerrohres 1 angepasst ist. In Figur 1 ist der Biegeradius R eingezeichnet, der sich auf die neutrale Zone des Anlageabschnittes 19 bezieht und dessen Zentrum auf der Längsachse 2 des Trägerrohres 1 angeordnet ist. Zum Befestigungsabschnitt 16 gehört auch die Befestigungsöse 17, welche sich an den als Kreisbogen verlaufenden Anlageabschnitt 19 anschließt und zu diesem so abgewinkelt ist, dass sie in Richtung zum ersten Windungsende 12 vorsteht. Die Durchtrittsöffnung 18 der Öse 17 für die Befestigungsschraube 5 ist also in einem Bereich zwischen dem ersten Windungsende 12 und dem zweiten Windungsende 13 angeordnet. Es wird somit eine in Richtung der Längsachse 2 kurz bauende Anordnung geschaffen. Darüber hinaus kann die Gestaltung so getroffen werden, dass ein möglichst geringer axialer Abstand in Richtung der Längsachse 2 zwischen dem Angriffsabschnitt 14 und der Bohrungsachse 3 und damit der Achse, welche die Durchtrittsöffnung 18 definiert, gegeben ist, um bei Belastung des Angriffsabschnittes 14 ein Verdrehen des Zinkens 8 möglichst auszuschalten. Es ist erkennbar, dass der Befestigungsabschnitt 16 im Verhältnis zu dem Übergangsabschnitt 20 und dem ersten Bereich 21 des Angriffsabschnittes 14 gleichsinnig zu dem Schraubenfederabschnitt 10 versetzt ist. Dies bedeutet, dass die Schraubenfederachse 11 und die Biegeachse 2 für den Anlageabschnitt 19 gleichsinnig zu diesen versetzt sind und das Trägerrohr 1 zwischen sich aufnehmen. Bei Belastung des Angriffsabschnittes 14 wird bei dieser Anordnung die Befestigungsschraube 3 im wesentlichen auf Scherung beansprucht. Ferner ist erkennbar, dass es sich bei der Befestigungsschraube 3 um eine solche mit einem flachen Kopf 6 handelt. Die Mutter 7 ist als Bundmutter gestaltet und von der schraubenfederabschnittseitigen Seite der Durchgangsbohrung 4 in das Trägerrohr 1 eingesteckt. Der Schraubenfederabschnitt 10 stützt sich mit einem Abschnitt seines Außenumfanges an der Mutter 7 ab. Die Mutter 7 kann dabei mit einer Verdrehsicherung versehen sein. Die Befestigungsschraube 3 weist einen Kopf 6 in Form eines Flachkopfes auf, der einen Innensechskant besitzt.

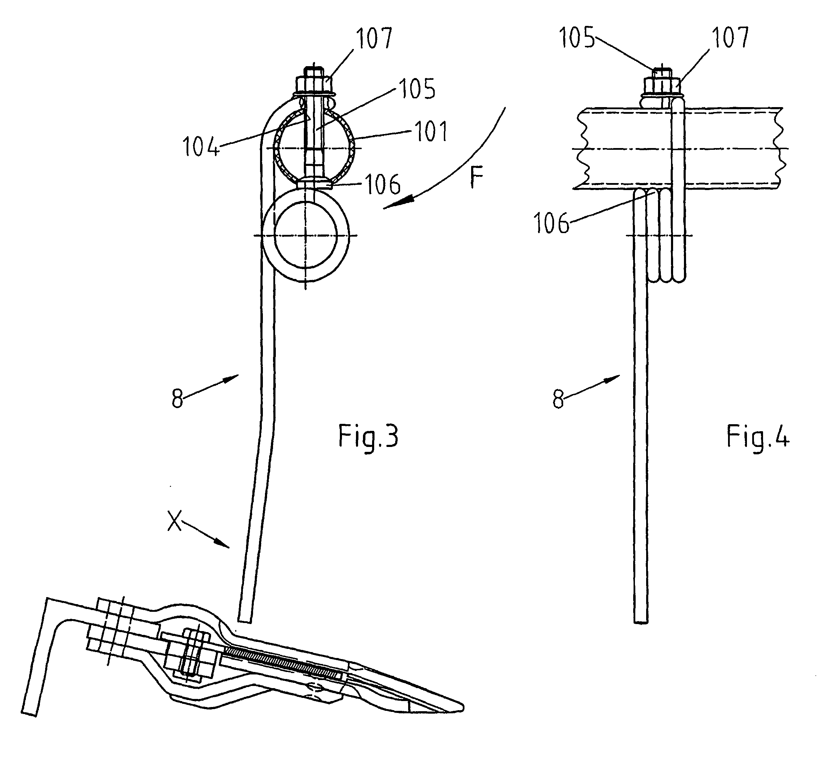

Bei der Ausgestaltung gemäß Figuren 3 und 4 wird ein Zinken 8 verwendet, der dem im Zusammenhang mit den Figuren 1 und 2 beschriebenen vollkommen entspricht. Eine Unterscheidung ergibt sich lediglich durch die Gestaltung der Befestigungsschraube 105 im Verhältnis zur Befestigungsschraube 5. In Figur 3 ist zusätzlich die Belastungsrichtung X für den Angriffsabschnitt eingezeichnet. Die Befestigungsschraube 105 unterscheidet sich hinsichtlich der Anordnung von der Befestigungsschraube bei der Ausführungsform gemäß der Figuren 1 und 2 dadurch, dass sich der Kopf 106 im Bereich des Schraubenfederabschnitts des Zinkens 8 befindet. Die Mutter 107 ist entsprechend im Bereich der Öse auf das Gewinde der Befestigungsschraube 104 aufgeschraubt.

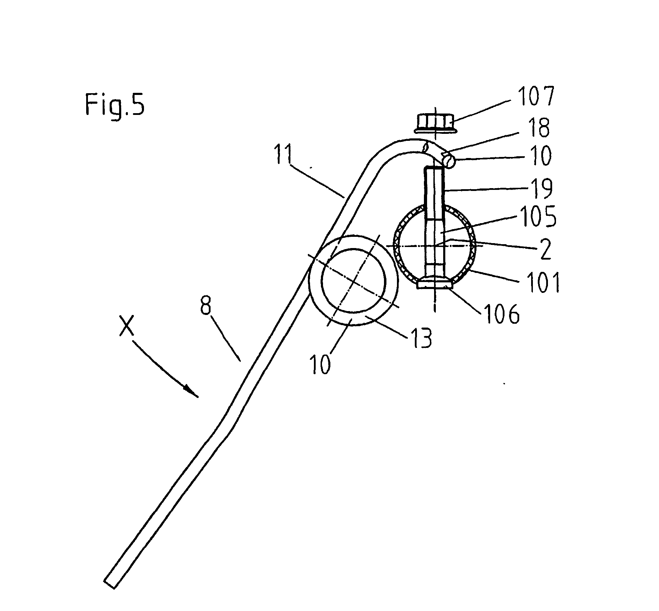

Aus Figur 5 ist die Montage hinsichtlich einer Ausführungsform, wie sie in den Figuren 3 und 4 dargestellt ist, ersichtlich. Es ist erkennbar, dass die Befestigungsschraube 105 bereits in die Durchgangsbohrung des Trägerrohres 101 eingeschoben ist. Der Zinken 8 wird in abgewinkelter Stellung so wie in Figur 5 ersichtlich mit der Durchtrittsöffnung 18 der Öse auf den mit Gewinde versehenen und aus dem Trägerrohr 101 radial austretenden Gewindeabschnitt der Befestigungsschraube 105 aufgeschoben. Dann wird in Pfeilrichtung X zur Erzielung eines Momentes entgegen dem Uhrzeigersinn auf den Zinken 8 eingewirkt, so dass dieser eingeschwenkt wird und der Schraubenfederabschnitt 10 in Anlage zum Schraubenkopf 106 gelangt und sich an diesem abstützt. Dadurch wird auch die Befestigungsschraube 5 in ihrer Position zunächst gesichert, und die Mutter 107 kann aufgeschraubt werden.

### Bezugszeichenliste

- 1, 101: Trägerrohr
- 2: Längsachse
- 3: Bohrungsachse
- 4, 104: Durchgangsbohrung
- 5, 105: Befestigungsschraube
- 6, 106: Kopf
- 7, 107: Mutter
- 8: Zinken
- 9: Mähfinger
- 10: Schraubenfederabschnitt
- 11: Schraubenfederachse
- 12: erstes Windungsende
- 13: zweites Windungsende
- 14: Angriffsabschnitt
- 15: freies Ende
- 16: Befestigungsabschnitt
- 17: Öse
- 18: Durchtrittsöffnung
- 19: Anlageabschnitt
- 20: Übergangsabschnitt
- 21: erster Bereich
- 22: zweiter Bereich

- F: Drehrichtung
- R: Biegeradius
- X: Pfeilrichtung

## Patentansprüche

1. Zinken (8) zur Befestigung an einem zylindrischen Trägerrohr (1, 101) einer Haspel für Schneidwerke an Erntemaschinen aus einem im Querschnitt runden, stabförmigen Ausgangsmaterial, umfassend
- einen zu einer Schraubenlinie mit mindestens einer Windung um eine Schraubenfederachse (11) gewundenen Schraubenfederabschnitt (10) mit einem ersten Windungsende (12) und einem zweiten Windungsende (13),
- einen geraden oder gebogen verlaufenden Angriffsabschnitt (14), der sich an das erste Windungsende (12) des Schraubenfederabschnitts (10) kontinuierlich anschließt und an einem freien Ende (15) endet,
- einen Befestigungsabschnit (16),
der sich an das zweite Windungsende (13) kontinuierlich anschließt,
der an seinem freien Ende zu einer Öse (17) mit einer Durchtrittsöffnung (18) gebogen ist, wobei die Öse (17) in Richtung zum ersten Windungsende (12) vorsteht,
der einen der Öse (17) vorgeschalteten und mit einem Kreisbogen (R), der auf einer zur Schraubenfederachse (11) parallelen Biegeachse (2) zentriert ist, verlaufenden Anlageabschnitt (19) aufweist, und
der ferner einen an den Anlageabschnitt (19) anschließenden und im zweiten Windungsende (13) endenden Übergangsabschnitt (20) aufweist,
wobei die Schraubenfederachse (11) und die Biegeachse (2) gleichsinnig von dem Angriffsabschnitt (14) versetzt sind.

2. Zinken gemäß Anspruch 1,
**dadurch gekennzeichnet,**
**daß** der Angriffsabschnitt (14) ausgehend vom ersten Windungsende (12) einen ersten Bereich (21) aufweist, der mit dem Übergangsabschnitt (20) des Befestigungsabschnitts (16) in einer Ebene liegt.

3. Zinken gemäß Anspruch 2,
**dadurch gekennzeichnet,**
**daß** der Übergangsabschnitt (20) und der Angriffsabschnitt (14) in entgegengesetzter Richtung vom Schraubenfederabschnitt (10) verlaufen.

4. Zinken gemäß Anspruch 1,
**dadurch gekennzeichnet,**
**daß** die Öse (17) rechtwinklig zu einer durch den kreisbogenförmigen Anlageabschnitt (16) aufgespannten Ebene verläuft.

5. Zinkenanordnung für eine Haspel für Schneidwerke an Erntemaschinen, mit
- einem zylindrischen Trägerrohr (1),
das eine Längsachse (2) und quer dazu eine Durchgangsbohrung (4) aufweist,
- einer Befestigungsschraube (5, 105),
die einen Kopf (6, 106) und eine Mutter (7, 107) aufweist, und
- mindestens einem Zinken (8), umfassend
- einen zu einer Schraubenlinie mit mindestens einer Windung um eine Schraubenfederachse (11) gewundenen Schraubenfederabschnitt (10) mit einem ersten Windungsende (12) und einem zweiten Windungsende (13),
- einen geraden oder gebogen verlaufenden Angriffsabschnitt (14), der sich an das erste Windungsende (12) des Schraubenfederabschnitts (10) kontinuierlich anschließt und an einem freien Ende (15) endet,
- einen Befestigungsabschnitt(16),
der sich an das zweite Windungsende (13) kontinuierlich anschließt,
der an seinem freien Ende zu einer Öse (17) mit einer Durchtrittsöffnung (18) gebogen ist, wobei die Öse (17) in Richtung zum ersten Windungsende (12) vorsteht,
der einen der Öse (17) vorgeschalteten und mit einem Kreisbogen (R), der auf einer zur Schraubenfederachse (11) parallelen Biegeachse (2) zentriert ist, verlaufenden Anlageabschnitt (19) aufweist, und
der ferner einen an den Anlageabschnitt (19) anschließenden und im zweiten Windungsende (13) endenden Übergangsabschnitt (20) aufweist,
wobei die Schraubenfederachse (11) und die Biegeachse (2) gleichsinnig von dem Angriffsabschnitt (14) versetzt sind,
wobei die Längsachse (2) die Biegeachse darstellt und parallel zur Schraubenfederachse (11) verläuft und wobei das Trägerrohr (1, 101) zwischen einem Außenumfangsabschnitts des Schraubenfederabschnitts (10) und dem Befestigungsabschnitt (16) angeordnet ist, so dass es von diesen teilweise umschlossen ist.

6. Zinkenanordnung nach Anspruch 5,
**dadurch gekennzeichnet,**
**dass** sich der Schraubenfederabschnitt (10) an dem Kopf (6) oder der Mutter (107) der Befestigungsschraube (5, 105) abstützt.

## Claims

1. A tine (8) for attaching on a cylindrical carrier tube (1, 101) of a reel for cutting devices on harvesting machines, made from a rod-like starting material having a round cross-section, comprising
- a helical spring portion (10) wound to a helical line with at least one winding around a helical spring axis (11) and having a first winding end (12) and a second winding end (13),
- a contact portion (14), which extends in a straight or bent manner and which follows continuously the first winding end (12) of the helical spring portion (10) and ends at a free end (15),
- an attachment portion (16),
which follows continuously the second winding end (13),
which is bent at its free end to an eyelet (17) with a through opening (18), wherein the eyelet (17) projects in direction towards the first winding end (12),
which has an abutment portion (19), arranged in front of the eyelet (17) and extends with a circular arc (R), centred on a bending axis (2) extending parallel to the helical spring axis (11), and
which has, furthermore, a transitional portion (20) following the abutment portion (19) and ending in the second winding end (13),
wherein the helical spring axis (11) and the bending axis (2) are off-set in the same sense from the contact portion (14).

2. Tine according to claim 1,
**characterised in that**
the contact portion (14) has, starting from the first winding end (12), a first portion (21), which is arranged with the transitional portion (20) of the attachment portion (16) in one plane.

3. Tine according to claim 2,
**characterised in that**
the transitional portion (20) and the contact portion (14) extend in opposite directions from the helical spring portion (10).

4. Tine according to claim 1,
**characterised in that**
the eyelet (17) extends at a right angle to a plane, formed by the circular arclike abutment portion (16).

5. A tine arrangement for a reel for cutting devices on harvesting machines, with
- a cylindrical carrier tube (1),
which has a longitudinal axis (2) and transversally thereto a through hole (4),
- a fixing screw (5, 105),
having a head (6, 106) and a nut (7, 107), and
- at least one tine (8), comprising
- a helical spring portion (10) wound to a helical line with at least one winding around a helical spring axis (11) and having a first winding end (12) and a second winding end (13),
- a contact portion (14), which extends in a straight or bent manner and which follows continuously the first winding end (12) of the helical spring portion (10) and ends at a free end (15),
- an attachment portion (16),
which follows continuously the second winding end (13),
which is bent at its free end to an eyelet (17) with a through opening (18), wherein the eyelet (17) projects in direction towards the first winding end (12),
which has an abutment portion (19), arranged in front of the eyelet (17) and extends with a circular arc (R), centred on a bending axis (2) extending parallel to the helical spring axis (11), and
which has, furthermore, a transitional portion (20) following the abutment portion (19) and ending in the second winding end (13),
wherein the helical spring axis (11) and the bending axis (2) are off-set in the same sense from the contact portion (14),
wherein the longitudinal axis (2) represents the bending axis and extends parallel to the helical spring axis (11) and wherein the carrier tube (1, 101) is arranged between an outer circumferential portion of the helical spring portion (10) and the attachment portion (16), so that it is partially enclosed by the same.

6. Tine arrangement according to claim 5,
**characterised in that**
the helical spring portion (10) is supported on the head (6) or the nut (7) of the fixing screw (5, 105).

## Revendications

1. Dent (8) destinée à être fixée sur un tube porteur cylindrique (1, 101) d'une rabatteuse pour les organes de coupe de machine de récolte, formée à partir d'un matériau de départ en forme de tige et de section ronde, comprenant :
- un tronçon en forme de ressort hélicoïdal (10) enroulé par rapport à une ligne hélicoïdale avec au moins une spire autour de l'axe du ressort hélicoïdal (11) et présentant une première extrémité de spire (12) et une seconde extrémité de spire (13),
- un tronçon d'attaque (14) à tracé rectiligne ou incurvé, qui se raccorde de façon continue à la première extrémité de spire (12) du tronçon en forme de ressort hélicoïdal (10) et qui se termine à une extrémité libre (15),
- un tronçon de fixation (16)
-- qui se raccorde de façon continue à la seconde extrémité de spire (13),
-- qui est cintré à son extrémité libre pour former un oeillet (17) avec une ouverture de passage (18), l'oeillet (17) dépassant en direction de la première extrémité de spire (12),
-- qui comprend un tronçon d'appui (19) réalisé avant l'oeillet (17) et s'étendant suivant un arc circulaire (R), lequel est centré par rapport à un axe de cintrage (2) parallèle à l'axe du ressort hélicoïdal (11), et
-- qui comprend en outre un tronçon de transition (20) qui se raccorde au tronçon d'appui (19) et qui se termine à la seconde extrémité de spire (13),
dans laquelle l'axe du ressort hélicoïdal (11) et l'axe de cintrage (2) sont décalés dans le même sens depuis le tronçon d'attaque (14).

2. Dent selon la revendication 1, **caractérisée en ce que** le tronçon d'attaque (14) comprend, partant de la première extrémité de spire (12), une première zone (21) qui se trouve dans un plan avec le tronçon de transition (20) du tronçon de fixation (16).

3. Dent selon la revendication 2, **caractérisée en ce que** le tronçon de transition (20) et le tronçon d'attaque (14) s'étendent en direction opposée depuis le tronçon en forme de ressort hélicoïdal (10).

4. Dent selon la revendication 1, **caractérisé en ce que** l'oeillet (17) s'étend à angle droit par rapport à un plan défini par le tronçon d'appui (16) en forme d'arc de cercle.

5. Système de dent pour une rabatteuse, destiné à des organes de coupe sur des machines de récolte, comprenant :
- un tube porteur cylindrique (1), qui présente un axe longitudinal (2) et un perçage traversant (4) perpendiculaire à celui-ci,
- une vis de fixation (5, 105), qui comprend une tête (6, 106) et un écrou (7, 107), et
- au moins une dent (8), laquelle comprend :
-- un tronçon en forme de ressort hélicoïdal (10) enroulé par rapport à une ligne hélicoïdale avec au moins une spire autour d'un axe (11) du ressort hélicoïdal, et présentant une première extrémité de spire (12) et une seconde extrémité de spire (13),
-- un tronçon d'attaque (14) à tracé rectiligne ou incurvé, qui se raccorde de façon continue à la première extrémité de spire (12) du tronçon en forme de ressort hélicoïdal (10) et qui se termine à une extrémité libre (15),
-- un tronçon de fixation (16)
• qui se raccorde de façon continue à la seconde extrémité de spire (13),
• qui est cintré à son extrémité libre pour former un oeillet (17) avec une ouverture de passage (18), ledit oeillet (17) dépassant en direction de la première extrémité de spire (12),
• qui comprend un tronçon d'appui (19) réalisé avant l'oeillet (17) et s'étendant suivant un arc circulaire (R), lequel est centré sur un axe de cintrage (2) parallèle à l'axe du ressort hélicoïdal (11), et
• qui comprend en outre un tronçon de transition (20) qui se raccorde au tronçon d'appui (19) et qui se termine à la seconde extrémité de spire (13),
• tel que l'axe du ressort hélicoïdal (11) et l'axe de cintrage (2) sont décalés dans le même sens depuis le tronçon d'attaque (14),
dans lequel l'axe longitudinal (2) représente l'axe de cintrage et s'étend parallèlement à l'axe du ressort hélicoïdal (11), et dans lequel le tube porteur (1, 101) est agencé entre un tronçon périphérique extérieur du tronçon en forme de ressort hélicoïdal (10) et le tronçon de fixation (16), de sorte qu'il est partiellement entouré par celui-ci.

6. Système de dent selon la revendication 5, **caractérisé en ce que** le tronçon en forme de ressort hélicoïdal (10) s'appuie contre la tête (6) ou contre l'écrou (107) de la vis de fixation (5, 105).
